# EUROPEAN PATENT SPECIFICATION

(11) **EP 1 995 583 B1**
(45) Date of publication and mention of the grant of the patent: **19.06.2019**
(21) Application number: 06729049.4
(22) Date of filing: 14.03.2006
(51) Int. Cl.: G01N 1/04, B23H 1/00

(54) **MATERIAL PIECE SCOOPING DEVICE**
MATERIALTEILABNEHMVORRICHTUNG
DISPOSITIF D'EXCAVATION DE MORCEAU DE MATERIAU

(43) Date of publication of application: 26.11.2008
(73) Proprietor: Kyushu Electric Power Co., Inc., Fukuoka-ken 810-8720 (JP); Kobe Material Testing Laboratory Co., Ltd., Hyogo-ku Kobe-shi, Hyogo 6520863 (JP)
(72) Inventor: TSURUI, Takafumi, Kobe-shi, Hyogo 6520863 (JP); FUJIWARA, Masaharu, Kobe-shi, Hyogo 6520863 (JP); NAGASAWA, Hiroyuki, Kobe-shi, Hyogo 6520863 (JP); KANAYA, Akihiro, Fukuoka-shi, Fukuoka 8108720 (JP); KUSUMOTO, Junichi, Fukuoka-shi, Fukuoka 8108720 (JP)
(74) Representative: Isarpatent
(86) International application number: PCT/JP2006/305015
(87) International publication number: WO 2007/105308

(56) References cited:
- JP-A- 10 076 427
- JP-A- 63 231 238
- JP-A- H08 108 319
- JP-A- H09 155 646
- JP-U- H0 633 046
- JP-U- 06 033 046
- JP-U- 63 146 743

## Description

### TECHNICAL FIELD

The present invention relates a material piece extracting apparatus and, more particularly to a material piece extracting apparatus capable of sampling a material piece or removing a defective portion from pipes and other constituent members of a facility, which are currently functioning in the operating facility, while minimizing the damage on the facility and minimizing the deformation of the constituent member of the facility due to the extracting operation or the accompanying heat.

### BACKGROUND ART

Facilities such as a power generating plant in operation, where operating conditions are relatively harsh or safety must be ensured, require it to monitor the deterioration of the strength of constituent members used in the operating facility, predict the remaining service life and carry out maintenance services in proper timing.

For this purpose, it is a common practice to employ a nondestructive testing method for inspecting the constituent members of the facility intended to continue the operation.

On the other hand, besides the nondestructive testing, a material may be taken out as a test piece from the constituent member of the facility. In this case, a member may be replaced as a whole before taking a test piece therefrom, or a large member may be transported to a factory where a test piece is taken from the member.

To sum up, a test piece or other material piece is taken after transporting the member to be tested to a facility equipped with a sampling apparatus, rather than transporting a sampling apparatus to the field and taking a test piece from the constituent member of the facility in the field.

Also, in case a constituent member of the facility has a defective portion in the surface thereof, it is necessary to remove the defective portion from the member, with the removed portion tested as required. However, there has been no apparatus which can be carried to the field and is capable of readily removing the defective portion from the constituent member of an operating facility.

Since the test piece or other material piece taken out of the constituent member of the facility is subjected to mechanical or other test, purpose of sampling is lost if the test piece is changed in nature such as deformation due to the extracting operation or the accompanying heat. It needs not to say that the deformation of the constituent member of the facility itself due to the extracting operation or the accompanying heat must be avoided.

To meet this requirement, for example, an electric discharge machine may be used to sample a test piece or remove a defective portion.

The electric discharge machine is an apparatus for machining an object by generating an electric discharging from the apparatus to the object. With this apparatus, the area of the object subjected to machining strain can be restricted within a relatively narrow region.

The nondestructive testing method is not capable of measuring the actual mechanical strength, and therefore it is difficult to estimate the deterioration of the constituent member of an operating facility and predict the life.

The conventional test piece sampling apparatuses which have been available are fixed type of heavy weight, which are not suitable for such an application as the apparatus is transported to the sampling site and is set for the operation of sampling on a constituent member of an operating facility.

In case the electric discharge machine is used to sample a test piece or other material piece, the material piece can be suppressed from undergoing mechanical and thermal deformations. However, the conventional electric discharge machine is a machining tool in nature, of which principal object is not to obtain a material piece, and is not convenient for the purpose of sampling a material piece.

The apparatuses described in Japanese Unexamined Patent Publication (Kokai) No. 2001-79658, Japanese Unexamined Patent Publication (Kokai) No. 10-76427, Japanese Unexamined Patent Publication (Kokai) No. 10-2988, Japanese Unexamined Patent Publication (Kokai) No. 9-218139, Japanese Unexamined Patent Publication (Kokai) No. 9-155646 and Japanese Unexamined Patent Publication (Kokai) No. 7-159295 have problems related to the operating procedure and the operating time such that material pieces cannot be sampled unless the operation of moving the electric discharge electrode is repeated several times. In addition, there has not been any means available for conveniently and easily adjust the trajectory of moving the electric discharge electrode including one that causes the electric discharge electrode simply to rotate and move along an arc-shaped trajectory. JPH0633046 U discloses a device for collecting a test piece for the remaining life diagnosis of various structures, the rotation mechanism portion that rotatably supports as rope skipping the U-shaped discharge electrode, the pedestal wherein the supporting member supported to be capable of horizontal and vertical turning through the horizontal pivot axis and a vertical pivot axis, the movement of the vertical and horizontal directions via a vertical slide mechanism and the left and right slide mechanisms is supported to be able to and the sampling device. JP H06 33046 discloses a sampling device whereby the sample is extracted with a discharge electrode of which the movements are controlled by a servo motor.

### DISCLOSURE OF THE INVENTION

Accordingly, an object of the present invention is to solve the problems described above and provide a material piece extracting apparatus of compact construction which is capable of sampling a test piece or removing a defective portion from pipes and other constituent members of a facility at the site, while minimizing the deformation caused by the extracting operation or the accompanying heat.

The material piece extracting apparatus of the present invention which solves the problems described above has a first feature that a material piece is extracted from the surface of an object to be extracted by generating an electric discharge between an electric discharge electrode and the object to be extracted so as to successively remove the material from the object to be extracted which is disposed to oppose the electric discharge electrode. The material piece extracting apparatus comprises rotation drive means, an arm driven by the rotation drive means to rotate around an axis of rotation, an electrode holder supported by the arm, and the electric discharge electrode detachably mounted on the electrode holder, while sliding means for sliding the arm in the direction perpendicular to the axis of rotation and arm length adjusting means for adjusting the length of the arm from the axis of rotation thereof are provided, so that the trajectory of moving the electric discharge electrode can be adjusted as the arm is driven to rotate, thereby enabling it to extract a material piece from the surface of the object to be extracted along a line which is formed by the trajectory of the electric discharge electrode gnawing into the object to be extracted.

Second feature of the material piece extracting apparatus according to the present invention is, in addition to the first feature described above, that the sliding means comprises a slide guide mounted on a rotary stage which is driven to rotate on the side of the rotation drive means, and a sliding member which is secured on the arm and is guided in the direction perpendicular to the axis of rotation by the slide guide.

Third feature of the material piece extracting apparatus according to the present invention is, in addition to the first or second feature described above, that the arm length adjusting means has an urging spring which urges the arm to slide in the direction perpendicular to the axis of rotation, and a tracing guide which is disposed along a circle drawn by the rotating arm and makes contact with the arm so as to guide the arm thereby to adjust the arm length during rotation.

Fourth feature of the material piece extracting apparatus according to the present invention is, in addition to the third feature described above, that a plurality of tracing guides having different guide surfaces are provided, from which a proper one is selected and detachably mounted.

Fifth feature of the material piece extracting apparatus according to the present invention is, in addition to the third or fourth feature described above, that a plurality of the tracing guides are combined and mounted.

Sixth feature of the material piece extracting apparatus according to the present invention is, in addition to one of the first to fifth features described above, that the arm is driven to make one-way or reciprocal motion.

Seventh feature of the material piece extracting apparatus according to the present invention is, in addition to one of the first to sixth features described above, that the arm length adjusting means controls the depth of the trajectory of the electric discharge electrode in the object to be extracted constant, so as to control the thickness of the material piece which is taken out constant.

According to the invention described in claim 1, as the arm is driven by the rotation drive means to rotate around the axis of rotation, the electrode holder mounted on the arm accordingly rotates while carrying the electric discharge electrode. As this rotation proceeds very slowly, electric discharge is generated between the electric discharge electrode and the object to be extracted which is disposed to face the electric discharge electrode near the rotating direction thereof, thereby removing the material from the object to be extracted along the trajectory of the electric discharge electrode. Accordingly a separating surface is formed and expands along the trajectory of the electric discharge electrode, so that eventually the portion of the object to be extracted separated by the separating surface is taken out. The material piece is subjected to a test, discarded as a defective portion or otherwise used. The object to be extracted may also be subjected to post-treatment according to the shape of the removed portion.

The material can be removed from the surface of the object to be extracted along the trajectory of the electric discharge electrode by setting the material piece extracting apparatus at the intended portion of the object to be extracted of the facility. At this time, a material piece having the predetermined shape can be removed from the target portion by controlling the trajectory of the electric discharge electrode.

Since the electric discharge electrode has a predetermined width in the direction perpendicular to the direction of rotation, this width roughly dictates the width of the material piece.

Radius of rotation of the electric discharge electrode can be adjusted during rotation by enabling the arm to slide in the direction perpendicular to the axis of rotation and controlling the length of arm by the arm length adjusting means. This enables it to change the trajectory of the electric discharge electrode from an arc shape to a more flat configuration and vice versa, in accordance to the thickness and shape of the object to be extracted, the kind of test to be conducted, condition of the defective portion to be removed, shape of the material piece to be obtained and other conditions. As a result, the material piece of a desired shape can be extracted by adjusting the trajectory of the electric discharge electrode gnawing through the object to be extracted.

Thus according to the invention described in claim 1, a material piece can be extracted from the surface of the target portion of the object to be extracted in the field. Also because the material piece is extracted by electric discharge machining, changes in the nature of the material piece caused during the extracting operation can be minimized by setting the optimum discharge conditions, and the material piece can be subjected to precision tests. Thus the material piece can be subjected to various mechanical tests, physical tests and chemical tests, so as to obtain various information such as the progress of fatigue, life estimate and the timing for conducting maintenance service. It needs not to say that the object to be extracted can be prevented from undergoing deterioration of the material.

Extraction of the material piece can also be carried out automatically as the arm rotates, thus making the operation easy. For a portion where stress concentration is expected or the material has been welded in a large structure, residual stress can be measured by attaching a strain gage and locally extracting the portion.

Also because the apparatus is the rotation drive means, the arm, the electrode holder, the electric discharge electrode, the arm sliding means, the arm length adjusting means and the like, it can be constituted relatively easily in a compact construction, and can be transported to the field and set up easily.

In addition the sliding means comprising the sliding member mounted on the arm, the rotary stage provided on the rotation drive means side and the slide guide makes it possible to move the arm in the direction perpendicular to the axis of rotation easily and reliably with a simple constitution.

Furthermore, the arm rotates while being urged by the urging spring in the direction perpendicular to the axis of rotation and makes contact with the tracing guide at the circumferential position, so that the sliding position in the direction perpendicular to the axis of rotation can be easily controlled.

Thus length of the arm can be adjusted easily and reliably during rotation with a simple constitution, by means of the arm length adjusting means which has the urging spring and the tracing guide.

According to the invention described in claim 2, in addition to the effects described above due to the constitution described in claim 1, the apparatus has such a constitution that has the plurality of tracing guides which have different guide surfaces from which a proper one is selected and detachably mounted, so that the tracing guide of an appropriate shape for the shape of the object to be extracted and the shape of the material piece can be selected and attached, thus making it possible to extract the material piece of the desired shape and easily obtain the object to be extracted from which a portion of the desired shape has been removed.

According to the invention described in claim 3, in addition to the effects described above due to the constitution described in claim or 2, the constitution of mounting the plurality of tracing guides provides the advantage that material pieces of various shapes can be extracted by means of a combination of the existing tracing guides, without the need to prepare a new tracing guide.

According to the invention described in claim 4, in addition to the effects described above due to the constitution according to any one of claims 1 to 3, the constitution of driving the arm to make one-way or reciprocal motion makes it possible that, in case the arm is driven to make one-way motion, a material piece can be extracted easily from the object to be extracted by the rotating motion in that direction. In case the arm is driven to make reciprocal motion, one additional step of operation is required for extraction, although a material piece of more complicated shape can be extracted.

According to the invention described in claim 5, in addition to the effects described above due to the constitution according to any one of claims 1 to 4, the constitution in which depth of the trajectory of the electric discharge electrode gnawing in the object to be extracted is controlled to be constant by means of the arm length adjusting means, so as to keep the thickness of the material piece taken out constant, makes it possible to prevent the object to be extracted from being gouged too deep. Also the capability of keep the thickness of the material piece taken out constant means that a test piece suitable for mechanical test can be sampled, and that unnecessary portion which is not used in the test being taken out of the object to be extracted can be minimized. The capability to prevent the object to be extracted from being gouged too deep is important for ensuring safety of the member.

### BRIEF DESCRIPTION OF THE DRAWINGS

Fig. 1 shows the material piece extracting apparatus according to first embodiment of the present invention, (A) being a plan view, (B) being a front view and (C) being a side view.
Fig. 2 is an exploded perspective view of the material piece extracting apparatus according to the first embodiment of the present invention.
Fig. 3 is a schematic diagram explanatory of the mechanism of the material piece extracting apparatus according to the first embodiment of the present invention, (A) being a front view and (B) being a side view.
Fig. 4 is a diagram explanatory of the material piece extracting operation by the material piece extracting apparatus according to the first embodiment of the present invention, (A) showing the operation near the beginning of the extracting operation, (B) showing the operation in the course of the extracting operation and (C) showing the operation near the end of the extracting operation.
Fig. 5 is a schematic diagram explanatory of the mechanism of the material piece extracting apparatus according to second embodiment of the present invention, (A) and (B) being front views and (C) being a side view.
Fig. 6 is a diagram explanatory of the material piece extracting operation by the material piece extracting apparatus according to the second embodiment of the present invention, (A) showing the operation near the beginning of the extracting operation by a first tracing guide, (B) showing the operation near the end of the extracting operation by the first tracing guide, (C) showing the operation near the beginning of the extracting operation by a second tracing guide and (D) showing the operation near the end of the extracting operation by the second tracing guide.

### [Description of Reference Numerals]

- 10: Electric discharge electrode
- 10a: Horizontal portion
- 10b: Vertical portion
- 20: Electrode holder
- 21: Holding section
- 21a: Mounting groove
- 21b: Lid
- 30: Arm
- 31: Main body
- 32: Sliding member
- 32a: Sliding groove
- 33: Insulator block
- 40: Rotation drive means
- 41: Rotation drive shaft
- 42: Rotary stage
- 42a: Slide guide
- 43: Limit switch activator piece
- 50: Base
- 51: Vertical wall
- 52: Opening
- 53: Limit switch
- 61: Urging spring
- 62: Spring mounting plate
- 62a: Protruding piece
- 63: Spring set bolt
- 64: Spring set bolt
- 65: Tracing bolt
- 65a: Roller
- 66: Tracing guide
- 66a: Guide surface
- 67: Tracing bolt
- 67a: Roller
- 67b: Urging spring
- 67c: Spacer
- 68: First tracing guide
- 68a: Guide surface
- 69: Second tracing guide
- 69a: Guide surface

- S: Material piece
- W: Width of electric discharge electrode
- X: Axis of rotation
- Z: Object to be extracted

### BEST MODE FOR CARRYING OUT THE INVENTION

First, the material piece extracting apparatus according to the first embodiment will be described.

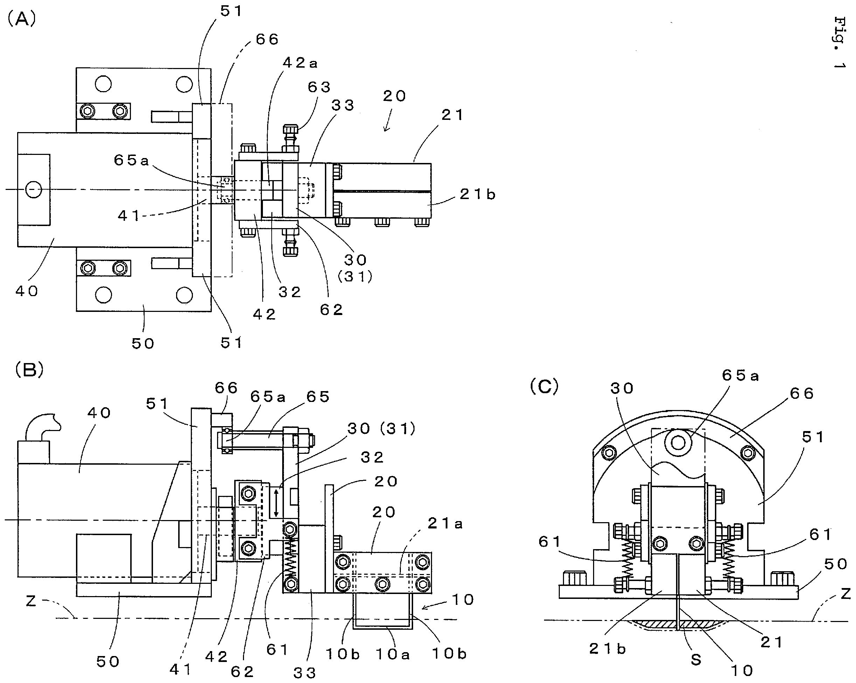

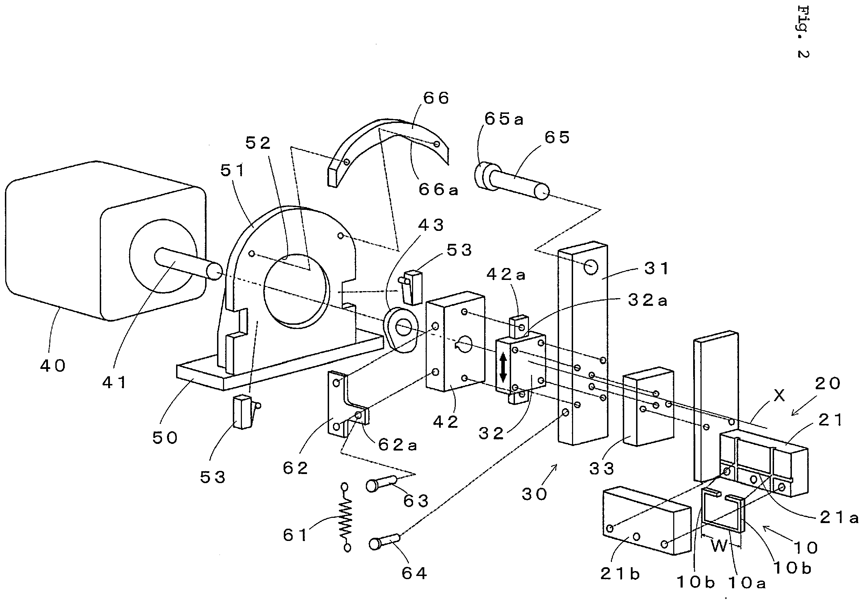

With reference made to Fig. 1 and Fig. 2, the material piece extracting apparatus of the present invention comprises an electric discharge electrode 10, an electrode holder 20 whereon the electric discharge electrode 10 can be detachably mounted, an arm 30 which holds the electrode holder 20, and rotation drive means 40 which causes the arm 30 to rotate around an axis of rotation X.

The rotation drive means 40 is constituted from a motor such as servo motor. The rotation drive means 40 is fixed on a base 50, and a rotation drive shaft 41 of the rotation drive means 40 protrudes through an opening 52 formed in a vertical wall 51 of the base 50.

The rotation drive shaft 41 of the rotation drive means 40 has the rotary stage 42 secured at the distal end thereof, the rotary stage 42 being driven to rotate together with the rotation drive shaft 41. The rotary table 42 is pivoted at the center thereof on the rotation drive shaft 41 and rotates around it.

The rotation drive shaft 41 of the rotation drive means 40 also has a limit switch activator piece 43 secured thereon at a mid position. The limit switch activator piece 43 makes contact with a pair of limit switches 53 mounted on the base 50 so as to turn on the limit switch 53, thereby keeping the rotation drive shaft 41 of the rotation drive means 40 from rotating further. The limit switch activator piece 43 and the limit switch 53 play the role of restricting the rotation of the arm 30 within a certain range.

The arm 30 causes the electric discharge electrode 10 to move along a circle about the axis of rotation of the arm 30.

The arm 30 is constituted so as to be driven by the rotation drive shaft 41 of the rotation drive means 40 to rotate around the axis of rotation X which corresponds to the rotation drive shaft 41, while sliding in a direction perpendicular to the axis of rotation X.

The arm 30 has the sliding member 32 secured on one side of an main body 31 which is formed in an elongated rectangular shape, and holds the electrode holder 20 on the other side via an insulation block 33.

The sliding member 32 has a slide groove 32a. The rotary table 42 has, on the side thereof opposite to the slide groove 32a, the slide guide 42a which passes through the axis of rotation X that is the center of rotation of the rotary table 42 and extends in the direction perpendicular to the axis of rotation X. The slide guide 42a is fitted in the slide groove 32a of the sliding member 32 so as to be capable of sliding relative to each other. Accordingly, the arm 30 can move sliding in direction perpendicular to the axis of rotation X.

The sliding member 32 having the slide groove 32a and the slide guide 42a mounted on the rotary table 42 constitute the sliding means.

The arm 30 is urged by the urging spring 61 in the direction perpendicular to the axis of rotation X. Specifically, the arm 30 is urged by the urging spring 61 in the sliding direction of the sliding means (32, 32a, 42a) .

The urging spring 61 is set between the spring set bolt 63 which is provided on the protruding piece 62a of the pair of spring mounting plates 62 secured on both sides of the rotary table 42, and the spring set bolt 64 provided on both sides of the main body 31 of the arm 30. The protruding piece 62a of the spring mounting plate 62 extends from the rotary table 42 toward the main body 31 of the arm 30, and the spring set bolt 63 is disposed just above the spring set bolt 64 on the side face of the main body 31 of the arm 30.

Provided above the main body 31 of the arm 30 is the tracing bolt 65 having the roller 65a provided at the distal end thereof. In correspondence to the tracing bolt 65, the tracing guide 66 is provided on the vertical wall 51 of the base 50.

The tracing bolt 65 is disposed in parallel to the axis of rotation X of the arm 30, and the roller 65a disposed at the distal end thereof is in contact with the guide surface 66a formed on the bottom of the tracing guide 66. The roller 65a moves along the guide surface 66a as the arm 30 rotates, while being pressed by the urging spring 61 against the guide surface 66a.

The tracing guide 66 is disposed on the circle drawn by the rotation of the arm 30. The guide surface 66a of the tracing guide 66 determines the trajectory along which the electric discharge electrode 10 moves. As the roller 65a moves along the profile of the guide surface 66a, the sliding position of the arm 30 in the direction perpendicular to the axis of rotation X during rotation is determined, so that length of the arm 30 is adjusted. That is, length of the arm 30 from the axis of rotation X to the position where the electric discharge electrode 10 is held is adjusted during rotation. As the length of the arm 30 is adjusted during rotation, the trajectory of the electric discharge electrode 10 is controlled.

The urging spring 61, the tracing bolt 65, the tracing guide 66 and the like (more specifically, the urging spring 61, the spring set bolts 63, 64, the tracing bolt 65 and the tracing guide 66) constitute the arm length adjusting means that adjusts the length of the arm from the axis of rotation X thereof.

The electrode holder 20 is held on the arm 30 via the insulation block 33. The electrode holder 20 has a holding member 21 which sandwiches the electric discharge electrode 10 so as to detachably hold it. The electric discharge electrode 10 is fitted in a mounting groove 21a of the holding member 21 and is clamped by the lid 21b, so as to be held. As the arm 30 rotates, the electrode holder 20 revolves around the axis of rotation X.

The electric discharge electrode 10 is formed in C shape and is constituted so as to keep a constant width W in the direction perpendicular to the rotating direction (parallel to the axis of rotation X). Specifically, the electric discharge electrode 10 has C shape consisting of a horizontal portion 10a having the width W and vertical portions 10b extending from both ends of the horizontal portion 10a. When the trajectory traced by the electric discharge electrode in accordance to the rotation of the arm 10 meets the object Z to be extracted, the material is removed from the portions of the object Z to be extracted which are close to and facing the horizontal portion 10a and the vertical portions 10b. In the area of the object Z to be extracted which is enclosed by the configuration of the electric discharge electrode, on the other hand, the material is not removed. As a result, the material piece S having the width of W is taken out of the object Z to be extracted.

While the electric discharge electrode 10 shown in the drawing has the horizontal portion 10a and the vertical portions 10b crossing each other with an angle of 90 degrees, the horizontal portion 10a and the vertical portions 10b may also be connected in U shape. The angle between the horizontal portion 10a and the vertical portions 10b is not limited to 90 degrees, and may be larger than or smaller than 90 degrees.

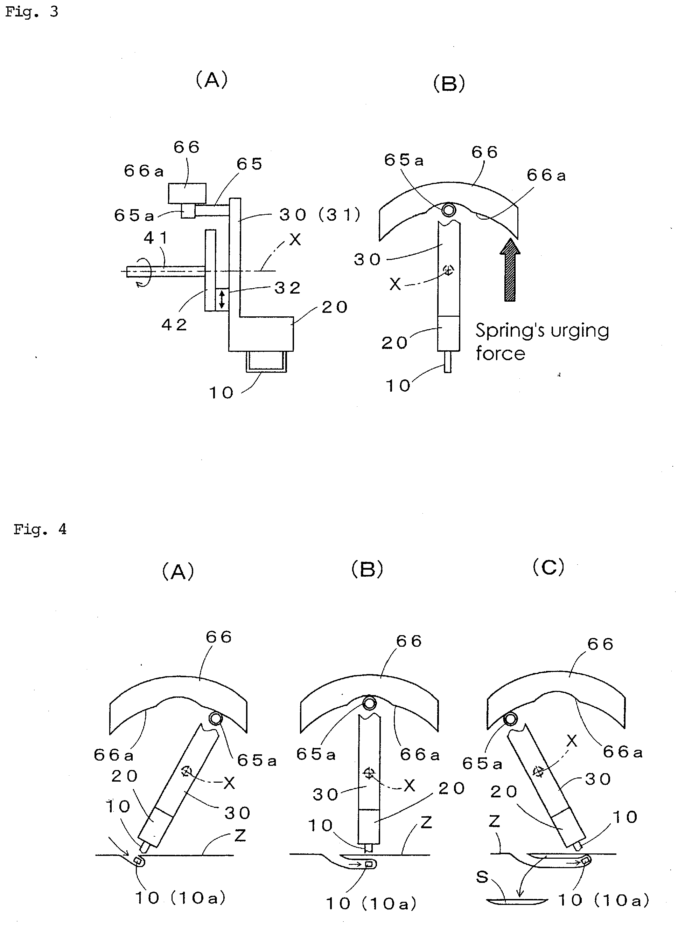

With reference made to Fig. 3 and Fig. 4 which simplify the material piece extracting apparatus, mechanism and operation of the material piece extracting apparatus according to the first embodiment will be described below.

When the rotation drive shaft 41 of the rotation drive means 40 is driven to rotate, the rotary stage 42 rotates accordingly, which in turn causes the main body 31 of the arm 30 to rotate. As the arm 30 rotates, the electric discharge electrode 10 moves around the axis of rotation X via the electrode holder 20. The arm 30 can be caused to slide by the sliding means (32, 32a, 42a), while the roller 65a moves while being pressed against the guide surface 66a by the arm length adjusting means (61, 65, 66), so that length of the arm is adjusted in accordance to the surface irregularity of the guide surface 66a. As the length of the arm 30 is adjusted during rotation, trajectory of the electric discharge electrode 10 is changed from the arc shape in the course of the rotation.

As shown in Fig. 3(B), the guide surface 66a of the tracing guide 66 has an arc-shaped surface as a whole with the mid portion being deeper than both sides. When the roller 65a passes the deep portion of the curved surface, length of the arm for rotating the electric discharge electrode 10 is controlled to be shorter. As a result, the electric discharge electrode 10 moves along such a trajectory that is arc-shaped at the start and the end which are connected by a boat-shaped portion which is proximate to straight line. After starting to gnaw into the object Z to be extracted along the arc-shape trajectory as shown in Fig. 4(A), the electric discharge electrode 10 proceeds at a substantially constant depth as shown in Fig. 4(B), before emerging from within the object Z to be extracted along the arc-shape trajectory as shown in Fig. 4(C). As a result, the material piece S having the boat shape is taken out of the object Z to be extracted.

As the guide surface 66a of the tracing guide 66 is formed in such a shape as the electric discharge electrode 10 traces the boat-shaped trajectory as described above, the material piece S having the boat shape with width of W is taken out of the object Z to be extracted. Since the thickness of the material piece S having the boat shape can be kept constant, the material piece can be easily prepared for mechanical test and other tests. Also because gnawing into the object Z to be extracted can be carried out at a far smaller depth in comparison to a case of, for example, taking out an arc-shaped material piece, adverse effects on the strength and safety of the object Z to be extracted can be minimized even when it is a part of a facility currently in operation.

Various shapes of the guide surface 66a of the tracing guide 66 can be employed in accordance to the shape of the material piece S to be extracted and the thickness and the shape of the object Z to be extracted. However, shapes of the guide surface 66a of the tracing guide 66 is preferably such that the electric discharge electrode 10 gnaws into the object Z to be extracted with a larger angle at the start of gnawing and the end of gnawing while, in the mid portion, gnawing along a path parallel to the surface of the object Z to be extracted.

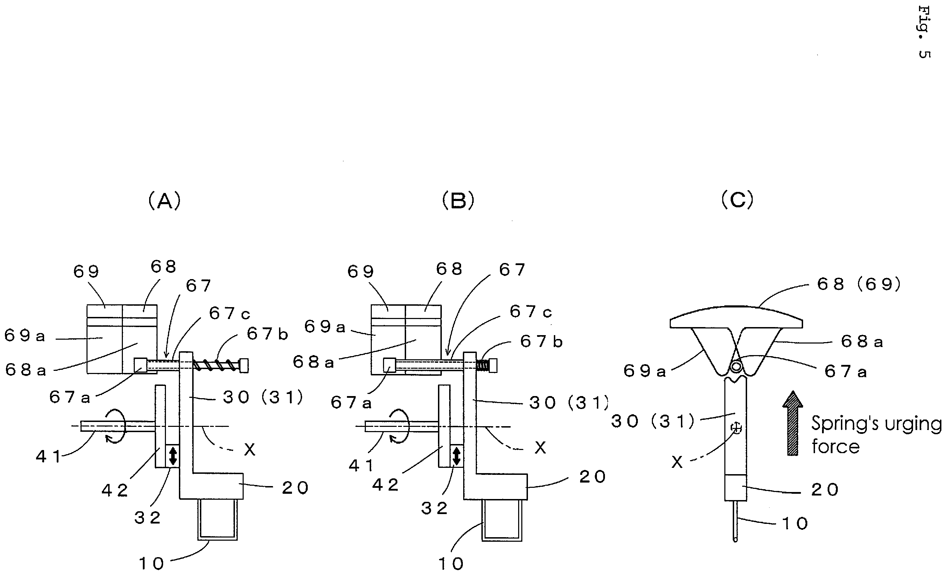

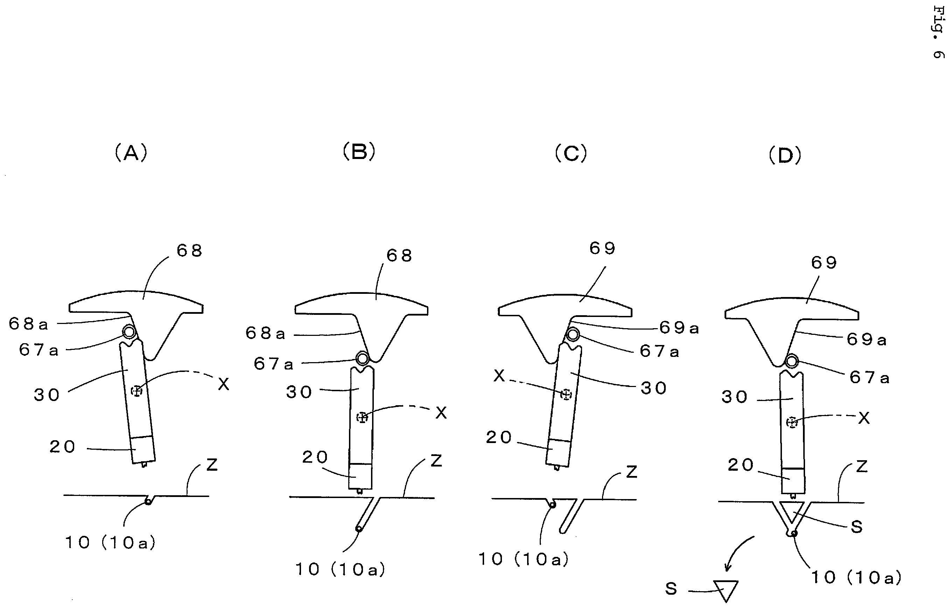

With reference made to Fig. 5 and Fig. 6, the material piece extracting apparatus according to the second embodiment of the present invention will be described below. The apparatus of the second embodiment has a constitution substantially the same as the material piece extracting apparatus of the first embodiment, except for the constitution of the tracing bolt 67, the first tracing guide 68, and the second tracing guide 69.

The second embodiment employs the electric discharge electrode 10 and the electrode holder 20 which have dimensions a little different from those of the first embodiment.

In the second embodiment, the tracing bolt 67 is provided to penetrate through the arm 30, and the roller 67a is provided at the distal end thereof. The urging spring 67b is provided on the tracing bolt 67 at a position behind the arm 30, so as to always urge the tracing bolt 67 backward (toward the rear end). A spacer 67c is detachably mounted on the tracing bolt 67 at a position in front of the arm 30, so that the spacer can be replaced with another one. Fig. 5(A) shows such a constitution as the spacer 67c having small length is used so that the roller 67a is brought into contact with the guide surface 68a which is formed on the bottom of the first tracing guide 68. Fig. 5(B) shows such a constitution as the spacer 67c having large length is used so that the roller 67a is brought into contact with the guide surface 69a which is formed on the bottom of the second tracing guide 69.

The second embodiment is a case which uses the first tracing guide 68 and the second tracing guide 69 in combination. Specifically, the second tracing guide 69 and the first tracing guide 68 are placed one on another and detachably mounted by screwing or the like on the vertical wall 51 of the base 50.

The guide surfaces 68a, 68b formed on the bottom of the first tracing guide 68 and the second tracing guide 69 are disposed symmetrically on the right and left, respectively. The guide surfaces 68a, 69a are both formed so as to protrude downward in substantially V shape. In this embodiment, the sloped surface on the left side of the substantially V shape that constitutes the guide surface 68a of the first tracing guide 68 is actually used as the guide surface. In the second tracing guide 69, the sloped surface on the right side of the substantially V shape that constitutes the guide surface 69a of the second tracing guide 69 is used as the guide surface.

Now the apparatus of the second embodiment will be described with reference to Fig. 6(A), Fig. 6(B), Fig. 6(C) and Fig. 6(D) which show the operation of the apparatus.

First, the shorter spacer 67c shown in Fig. 5(A) is used and set so that the roller 67a of the tracing bolt 67 makes contact with the guide surface 68a of the first tracing guide 68. The arm 30 is set so as to rotate clockwise first. This causes the electric discharge electrode 10 to start gnawing into the object Z to be extracted in an arc-shaped trajectory while turning clockwise (A). The electric discharge electrode turns clockwise until the arm 30 is disposed at right angles to the surface of the object Z to be extracted. The arm 30 rotates while being guided by the substantially V-shaped guide surface 68a of the first tracing guide 68, and length of the arm is adjusted by sliding in the direction perpendicular to the axis of rotation X. Accordingly, in this embodiment, the electric discharge electrode 10 gnaws into the object Z to be extracted in a straight path to the left downward from the surface of the object. When the electric discharge electrode has proceeded to the state shown in Fig. 6(B), the electric discharge machining is once stopped and the electric discharge electrode 10 is removed from the object Z to be extracted by rotating the arm 30 in reverse direction or otherwise.

After the electric discharge electrode 10 has been removed from the object Z to be extracted, the spacer 67c of the tracing bolt 67 is changed from the shorter one shown in Fig. 5(A) to the longer one shown in Fig. 5(B). Accordingly, the roller 67a of the tracing bolt 67 makes contact with the guide surface 69a of the second tracing guide 69.

Then the arm 30 is rotated counterclockwise. This causes the electric discharge electrode 10 to start gnawing into the object to be extracted Z in an arc-shaped trajectory while turning counterclockwise (C). The electric discharge electrode turns counterclockwise until the arm 30 is disposed at right angles to the surface of the object Z to be extracted. The arm 30 rotates while being guided by the substantially V-shaped guide surface 69a of the first tracing guide 69, and length of the arm is adjusted by sliding in the direction perpendicular to the axis of rotation X. Accordingly, in this embodiment, the electric discharge electrode 10 gnaws into the object Z to be extracted in a straight path to the right downward from the surface of the object. When the electric discharge electrode has proceeded to the state shown in Fig. 6(D), rotation of the arm 30 is stopped and the electric discharge machining is stopped. In this process, a material piece S having V-shaped cross section is taken out of the object Z to be extracted.

Such a constitution is also within the scope of the present invention that, as in the second embodiment, besides combining the two tracing guides 68, 69, the arm 30 is driven to move reciprocally to take out the material piece S so that, by causing the arm 30 (the electric discharge electrode 10) to move reciprocally rather than one-way motion, thereby to take out the material piece S.

### INDUSTRIAL APPLICABILITY

The material piece extracting apparatus of the present invention is capable of taking out a material piece from the surface of various structures including tubes, solid material, etc. made of various metallic materials. More particularly, the material piece extracting apparatus is capable of sampling a material piece or removing a defective portion from pipes and other constituent member of a facility which are currently functioning in the operating facility, while minimizing the damage caused on the facility and minimizing the deformation of the constituent member of the facility due to the extracting operation or the accompanying heat, thus offering great industrial utility.

## Claims

1. A material piece extracting apparatus for extracting a material piece from the surface of an object to be extracted by generating an electric discharge between an electric discharge electrode (10) and the object to be extracted so as to successively remove the material from the object to be extracted that is disposed to oppose the electric discharge electrode (10), the material piece extracting apparatus comprising rotation drive means (40), an arm (30) driven to rotate around an axis of rotation (X) by said rotation drive means (40), an electrode holder (20) supported by said arm (30), and the electric discharge electrode (10) detachably mounted on said electrode holder, while sliding means (32, 32a, 42a) for sliding said arm (30) in the direction perpendicular to said axis of rotation (X) and arm length adjusting means (61, 65, 66) for adjusting the length of the arm (30) from the axis of rotation (X) thereof, so as to adjust the trajectory of moving the electric discharge electrode (10) as the arm (30) is driven to rotate, and enable it to extract the material piece from the surface of the object to be extracted along a line which is followed by the trajectory of the electric discharge electrode (10) gnawing into the object to be extracted, **characterised in that** said sliding means (32, 32a, 42a) is disposed on the side of the rotation drive means (40) and comprises a slide guide (42a) mounted on a rotary stage (42) which is driven to rotate and a sliding member (32) which is secured on the arm (30) and is guided by said slide guide (42a) in the direction perpendicular to the axis of rotation (X), wherein the arm length adjusting means (61, 65, 66) has an urging spring (61) which urges the arm (30) to slide in the direction perpendicular to the axis of rotation (X), and a tracing guide (66) which is provided along the circle drawn by the rotation of the arm (30) and makes contact with the arm (30) and guides the arm (30) so as to adjust the arm (30) length during rotation.

2. The material piece extracting apparatus according to claim 1, wherein a plurality of tracing guides (66) are provided having different guide surfaces (66a), from which a proper one is selected and detachably mounted.

3. The material piece extracting apparatus according to claim 1 or 2, wherein a plurality of tracing guides (66) are combined and mounted.

4. The material piece extracting apparatus according to any one of claims 1 to 3, wherein the arm (30) is driven to make one-way motion or reciprocal motion.

5. The material piece extracting apparatus according to any one of claims 1 to 4, wherein depth of the trajectory through which the electric discharge electrode (10) gnaws into the object to be extracted is controlled to be constant by the arm (30) length adjusting means, thereby to control the thickness of the material piece to be extracted constant.

## Patentansprüche

1. Materialstück-Extraktionsvorrichtung zum Extrahieren eines Materialstücks von der Oberfläche eines zu extrahierenden Objekts durch Erzeugen einer elektrischen Entladung zwischen einer Elektroentladungselektrode (10) und dem zu extrahierenden Objekt, so dass das Material nach und nach von dem zu extrahierenden Objekt entfernt wird, das so angeordnet ist, dass es der Elektroentladungselektrode (10) gegenüber liegt, wobei die Materialstück-Extraktionsvorrichtung Folgendes umfasst: ein Drehantriebsmittel (40), einen Arm (30), der durch das Drehantriebsmittel (40) so angetrieben wird, dass er sich um eine Rotationsachse (X) dreht, einen Elektrodenhalter (20), der durch den Arm (30) gestützt wird, wobei die Elektroentladungselektrode (10) abnehmbar an dem Elektrodenhalter montiert ist, ein Verschiebungsmittel (32, 32A 42a) zum Verschieben des Arms (30) in der Richtung senkrecht zu der Rotationsachse (X), und ein Armlängeneinstellmittel (61, 65, 66) zum Einstellen der Länge des Arms (30) von seiner Rotationsachse (X) aus, um den Bewegungspfad der Elektroentladungselektrode (10), wenn der Arm (30) in Drehbewegung versetzt wird, einzustellen, und ihn in die Lage zu versetzen, das Materialstück von der Oberfläche des zu extrahierenden Objekts entlang einer Linie zu extrahieren, auf der der Bewegungspfad der Elektroentladungselektrode (10) verläuft, die sich in das zu extrahierende Objekt frisst,
**dadurch gekennzeichnet, dass**
das Verschiebungsmittel (32, 32A 42a) auf der Seite des Drehantriebsmittels (40) angeordnet ist und Folgendes umfasst:
eine Gleitführung (42a), die auf einer Drehbühne (42) montiert ist, die in Drehbewegung versetzt wird, und ein Gleitelement (32), das an dem Arm (30) befestigt ist und durch die Gleitführung (42a) in der Richtung senkrecht zu der Rotationsachse (X) geführt wird, wobei das
Armlängeneinstellmittel (61, 65, 66) Folgendes aufweist: eine Drückfeder (61), die gegen den Arm (30) drückt, damit er in der Richtung senkrecht zu der Rotationsachse (X) gleitet, und eine Nachführung (66), die entlang des Kreises angeordnet ist, der durch die Drehung des Arms (30) gezogen wird, und Kontakt mit dem Arm (30) herstellt und den Arm (30) führt, um die Länge des Arm (30) während der Drehung einzustellen.

2. Materialstück-Extraktionsvorrichtung nach Anspruch 1, wobei mehrere Nachführungen (66) vorhanden sind, die verschiedene Führungsflächen (66a) aufweisen, unter denen eine richtige ausgewählt wird und abnehmbar montiert wird.

3. Materialstück-Extraktionsvorrichtung nach Anspruch 1 oder 2, wobei mehrere Nachführungen (66) kombiniert und montiert sind.

4. Materialstück-Extraktionsvorrichtung nach einem der Ansprüche 1 bis 3, wobei der Arm (30) so angetrieben wird, dass er eine Einweg-Bewegung oder eine hin- und hergehende Bewegung vollführt.

5. Materialstück-Extraktionsvorrichtung nach einem der Ansprüche 1 bis 4, wobei die Tiefe des Bewegungspfades, entlang dem sich die Elektroentladungselektrode (10) in das zu extrahierende Objekt frisst, durch das Arm (30)-Längeneinstellmittel so gesteuert wird, dass sie konstant ist, wodurch die Dicke des zu extrahierenden Materialstücks konstant gesteuert wird.

## Revendications

1. Appareil d'extraction de morceau de matériau pour extraire un morceau de matériau de la surface d'un objet devant subir une extraction en générant une décharge électrique entre une électrode de décharge électrique (10) et l'objet devant subir une extraction de façon à enlever successivement le matériau de l'objet devant subir une extraction qui est disposé pour s'opposer à l'électrode de décharge électrique (10), l'appareil d'extraction de morceau de matériau comprenant un moyen d'entraînement en rotation (40), un bras (30) entraîné en rotation autour d'un axe de rotation (X) par ledit moyen d'entraînement en rotation (40), un porte-électrode (20) supporté par ledit bras (30), et l'électrode de décharge électrique (10) montée amovible sur ledit porte-électrode, tandis qu'un moyen de coulissement (32, 32a, 42a) pour faire coulisser ledit bras (30) dans la direction perpendiculaire audit axe de rotation (X) et un moyen de réglage de longueur de bras (61, 65, 66) pour régler la longueur du bras (30) depuis son axe de rotation (X), de façon à régler la trajectoire de déplacement de l'électrode de décharge électrique (10) à mesure que le bras (30) est entraîné en rotation, et lui permettre d'extraire le morceau de matériau de la surface de l'objet devant subir une extraction le long d'une ligne qui est suivie par la trajectoire de l'électrode de décharge électrique (10) rongeant l'objet devant subir une extraction,
**caractérisé en ce que** ledit moyen de coulissement (32, 32a, 42a) est disposé sur le côté du moyen d'entraînement en rotation (40) et comprend un guide de coulissement (42a) monté sur un étage rotatif (42) qui est entraîné en rotation et un organe de coulissement (32) qui est assujetti sur le bras (30) et est guidé par ledit guide de coulissement (42a) dans la direction perpendiculaire à l'axe de rotation (X), dans lequel le moyen de réglage de longueur de bras (61, 65, 66) comporte un ressort de poussée (61) qui pousse le bras (30) en coulissement dans la direction perpendiculaire à l'axe de rotation (X), et un guide de traçage (66) qui est prévu le long du cercle dessiné par la rotation du bras (30) et vient en contact avec le bras (30) et guide le bras (30) de façon à régler la longueur du bras (30) pendant la rotation.

2. Appareil d'extraction de morceau de matériau selon la revendication 1, dans lequel une pluralité de guides de traçage (66) sont prévus ayant des surfaces de guidage différentes (66a), parmi lesquels un guide approprié est sélectionné et monté amovible.

3. Appareil d'extraction de morceau de matériau selon la revendication 1 ou 2, dans lequel une pluralité de guides de traçage (66) sont combinés et montés.

4. Appareil d'extraction de morceau de matériau selon l'une quelconque des revendications 1 à 3, dans lequel le bras (30) est entraîné pour réaliser un mouvement unidirectionnel ou un mouvement en va-et-vient.

5. Appareil d'extraction de morceau de matériau selon l'une quelconque des revendications 1 à 4, dans lequel une profondeur de la trajectoire à travers laquelle l'électrode de décharge électrique (10) ronge l'objet devant subir une extraction est commandée pour être constante par le moyen de réglage de longueur de bras (30), afin de commander ainsi l'épaisseur du morceau de matériau à extraire pour qu'elle soit constante.
